# EUROPEAN PATENT APPLICATION

(11) **EP 2 990 453 A1**
(43) Date of publication of application: **02.03.2016**
(21) Application number: 14788591.7
(22) Date of filing: 20.03.2014
(51) Int. Cl.: C09J 7/02, H01L 31/042

(54) **ADHESIVE MEMBER AND DISPLAY UNIT FOR TOUCH SCREEN COMPRISING SAME**

(30) Priority: 26.04.2013 KR 20130046541
(71) Applicant: Duksan Sg Co., Ltd, Siheung-si Gyeonggi-do 15089 (KR); Kim, Jiwoong, Bucheon-si, Gyeonggi-do 420-410 (KR)
(72) Inventor: KIM, Jiwoong, Bucheon-si Gyeonggi-do 420-410 (KR)
(74) Representative: Epping - Hermann - Fischer
(86) International application number: PCT/KR2014/002375
(87) International publication number: WO 2014/175553

(57) **Abstract**

An adhesive member includes: an adhesive layer which has an adhesive function on both faces; and protective films which are provided on both faces of the adhesive layer, wherein a printable layer for forming a print layer or a deposition layer representing any one or more of a letter, a figure, a pattern, and a metallic texture is provided on one face of the adhesive layer from which any one of the pair of protective films is removed.

## Description

### [Technical Field]

The present invention relates to an adhesive member which has an adhesive function on both faces and in which a printable layer is provided on one face thereof, to form a print layer or a deposition layer representing a letter, a figure, a pattern, a metallic texture, and the like, thereby removing a PET film necessarily required for printing as conventional, to achieve decrease in thickness, reduction in manufacturing costs, and improvement in productivity.

The present invention relates to a display unit for a touch screen which is attached to a window in a state where a print layer and a deposition layer are formed on a printable layer and has an adhesive member to prevent the window from be scattered when the window is broken.

The present invention relates to a display unit for a touch screen which can be attached irrespective of a shape (for example, a curved face) of a window made of tempered glass or PC.

### [Background Art]

A portable terminal means a communication apparatus capable of talking over a telephone and transmitting and receiving data while moving. Recently, a portable terminal has various and useful functions according to the generation of digital convergence. For example, a user uses AOD (audio on demand) and VOD (video on demand) services, uses video calling in which users talks over a telephone while directly seeing a face of the opponent, or downloads and plays a game. In other words, the portable terminal is not limited to an area of a voice calling apparatus any longer.

As the functions embodied in the portable terminal are varied, users feel that it is necessary to rapidly and conveniently control the portable terminal, and manufacturers of portable terminals provide a display unit (hereinafter, referred to as "touch display unit") having a touch screen function to the users.

Meanwhile, touch screen panels used in portable terminals are classified into a capacitive overlay type, a resistive overlay type, a surface acoustic wave type, a transmitter type, an infrared beam type, and the like. Among such various types of touch screen panels, the capacitive overlay type is mainly used in portable terminals.

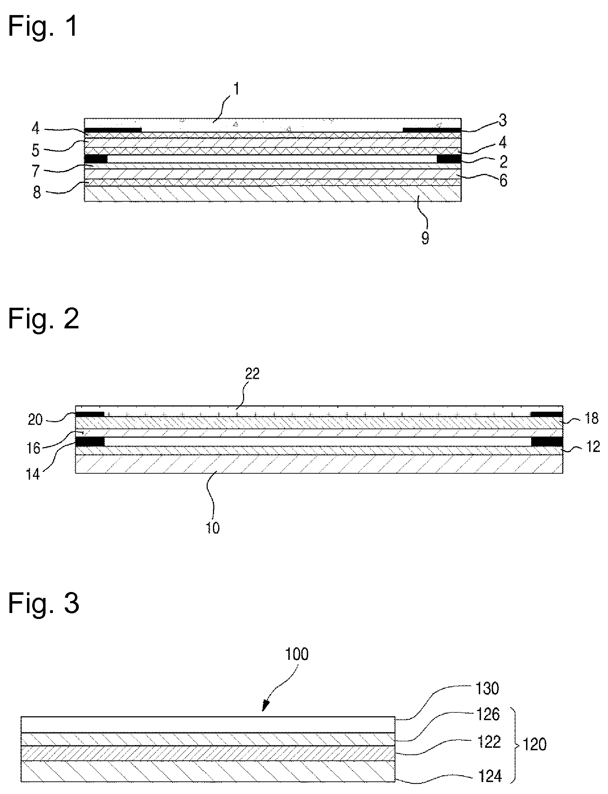

As illustrated in Figure 1, the touch screen panel in the capacitive overlay type includes a window 1 which is made of PET which is an insulator or a dielectric, an icon unit 3 which covers a silver paste electrode 2 coupled after coating on an edge of a lower face of the window 1 and on which a logo and the like are printed, a PC sheet or glass (glass: 5) which is coupled to the window 1 by a double-sided tape 4), a dielectric film 6 which is coupled to a lower face of the glass 5 by the double-sided tape 4 and is made of a PET material, an ITO coating layer 7 which is deposited on a portion of sensing a touch at an upper portion of the dielectric film 6 with a transparent conductive material such as ITO, the silver paste electrode 2 which is coupled to an edge of the ITO coating layer 7 to transmit an electric signal thereof to a control unit, and an LCD 9 which is attached to a lower face of the dielectric film 6 by a double-sided tape 8.

However, in the case of the conventional touch screen panel in the capacitive overlay type as described above, three double-sided tapes (OCA tap: 4, 8) are used in the sheet attaching process, foreign substances and a bubble phenomenon significantly occur due to the attaching process of the double-sided tapes at the time of manufacturing a patch display unit in the current process, a lot of defects occur, and a process defect rate becomes high due to contraction of the double-sided tapes and lumping of the adhesive.

Accordingly, as illustrated in the accompanying Figure 2, Korean Laid-Open Patent No. 10-2010-0065486 discloses "capacitive overlay touch screen pattern structure", wherein a window is used, a CNT material is coated in a screen manner to improve the strength of a display unit, and a double-sided tape attaching process is reduced to decrease a defect rate.

In other words, the touch panel includes a high-strength plate 18 made of a high-strength material such as acryl or window, a UV coating layer 22, an icon unit 20, a CNT coating layer 16, a silver paste electrode 14, a ground electrode 24, and an LCD 10.

However, in the touch panel configured as described above, the CNT coating layer 16 and the silver paste electrode 14 are printed in a silk screen manner, productivity is lowered, the expensive high-strength plate 18 employing the window is classified as a defective product when a defect occurs in any one process of the processes of forming the multiple layers described above, and a yield is lowered, which is not preferable.

In addition, as the window forming external appearance of the touch panel, a PC sheet or tempered glass is applied. When corners are formed to be rounded to improve the external appearance of the portable terminal and even when the PET film is attached to the lower face of the window by a double-sided tape, the adhesion of the double-sided tape is decreased due to hardness and resiliency of the PET film and is separated thereby.

### [Summary of Invention]

### [Technical Problem]

The invention has been made to solve the problems, and an object of the invention is to provide an adhesive member which has an adhesive function on both faces and in which a printable layer is provided on one face thereof, to form a print layer or a deposition layer representing a letter, a figure, a pattern, a metallic texture, and the like, thereby removing a PET film necessarily required for printing as conventional, to achieve decrease in thickness, reduction in manufacturing costs, and improvement in productivity.

Another object of the invention is to provide a display unit for a touch screen which is attached to a window in a state where a print layer and a deposition layer are formed on a printable layer and has an adhesive member to prevent the window from being scattered when the window is broken.

Still another object of the invention is to provide a display unit for a touch screen which can be attached irrespective of a shape (for example, a curved face) of a window made of tempered glass or PC since the PET film is removed to improve formability, and which is not separated after attaching and keeps adhesive performance.

### [Solution to Problem]

According to an aspect of the invention to achieve the objects described above, there is provided an adhesive member including: an adhesive layer which has an adhesive function on both faces; and protective films which are provided on both faces of the adhesive layer, wherein a printable layer for forming a print layer or a deposition layer representing any one or more of a letter, a figure, a pattern, and a metallic texture is provided on one face of the adhesive layer from which any one of the pair of protective films is removed.

The printable layer is a UV coating layer.

According to another aspect of the invention, there is provided a display unit for a touch screen having an adhesive member, including: an adhesive member including an adhesive layer which has an adhesive function on both faces, and protective films which are provided on both faces of the adhesive layer, wherein a printable layer for forming a print layer or a deposition layer representing any one or more of a letter, a figure, a pattern, and a metallic texture is provided on one face of the adhesive layer from which any one of the pair of protective films is removed; a print layer which is formed on the printable layer; and a print protective layer for protecting the print layer.

According to still another aspect of the invention, there is provided a display unit for a touch screen having an adhesive member, including: an adhesive member including an adhesive layer which has an adhesive function on both faces, and protective films which are provided on both faces of the adhesive layer, wherein a printable layer for forming a print layer or a deposition layer representing any one or more of a letter, a figure, a pattern, and a metallic texture is provided on one face of the adhesive layer from which any one of the pair of protective films is removed; a deposition layer which is formed on the printable layer and diffuses external light; a print layer which is formed on the deposition layer; and a print protective layer for protecting the print layer.

A pattern unit having a pattern is provided on one side of the printable layer.

The adhesive member is attached to a window by selectively removing the protective film provided on one face.

The print layer is formed of multiple layers.

### [Advantageous Effects of Invention]

In the invention, the printable layer is provided on one face of the adhesive member having the adhesive function on both faces, the print layer or the deposition layer representing a letter, a figure, a pattern, a metallic texture, and the like can be formed, and the PET film necessarily required for printing as conventional is unnecessary.

Accordingly, it is possible to reduce a thickness as much as the thickness of the PET film, the PET film which is an expensive imported article is unnecessary, and it is possible to significantly reduce manufacturing costs.

In the structure including the PET film, defects such as attachment of foreign substances or scar frequently occurs, and the PET film cannot regenerated when a defect occurs. However, since the invention has a structure in which the PET film is unnecessary, it is possible to significantly reduce the defect rate, it is possible to improve the productivity, and the window can be regenerated even when a defect occurs after being attached to the window.

In addition, the print layer and the deposition layer are formed on the printable layer, the adhesive member is attached to the window using the adhesive function of the other face of the adhesive member, and it is possible to prevent the window from being scattered when the window is broken.

Moreover, the adhesive member is directly attached to the window without providing the PET film which is thick and has strength, and the adhesive member can be attached even to a curved window.

### [Brief Description of Drawings]

[Figure 1] Figure 1 is a longitudinal cross-sectional view illustrating a structure of a touch display unit in a capacitive overlay type according to the related art.
[Figure 2] Figure 2 is a longitudinal cross-sectional view illustrating a structure of a touch display unit disclosed in Korean Laid-Open Patent No. 10-2010-0065486.
[Figure 3] Figure 3 is a longitudinal cross-sectional view illustrating a configuration of a preferred embodiment of an adhesive member according to the invention.
[Figure 4] Figure 4 is a longitudinal cross-sectional view illustrating an adhesive member according to the invention.
[Figure 5] Figure 5 is a plan view illustrating an external appearance configuration of a panel employing a display unit for a touch screen according to the invention.
[Figure 6] Figure 6 is a longitudinal cross-sectional view of I-I' of Figure 5 illustrating an internal configuration of a first embodiment of a display unit for a touch screen having an adhesive member according to the invention, and a longitudinal cross-sectional view before attaching a window.
[Figure 7] Figure 7 is a longitudinal cross-sectional view of I-I' of Figure 5 illustrating an internal configuration of a second embodiment of a display unit for a touch screen having an adhesive member according to the invention, and a longitudinal cross-sectional view before attaching a window.

### [Description of Embodiments]

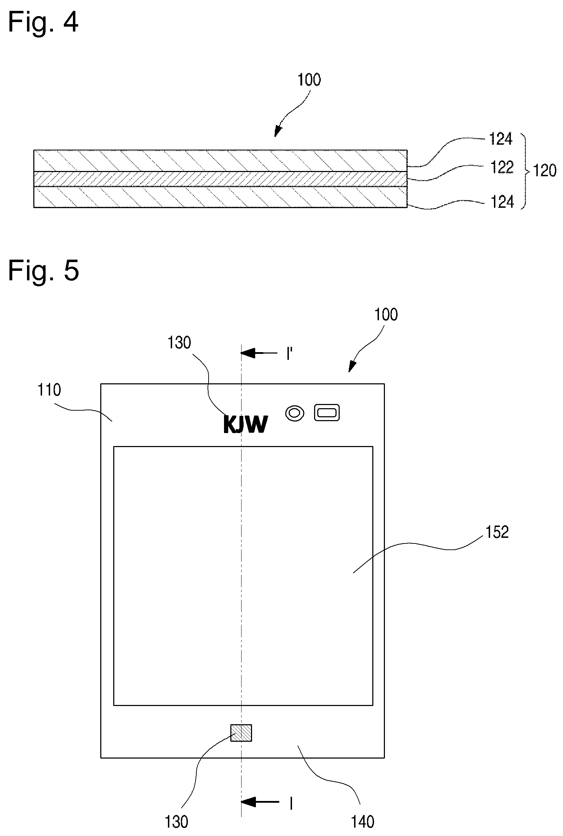

Hereinafter, an adhesive member 120 according to the invention will be described with reference to the accompanying Figure 3 and Figure 4.

Figure 3 is a longitudinal cross-sectional view illustrating a configuration of a preferred embodiment of the adhesive member 120 according to the invention, and Figure 4 is a longitudinal cross-sectional view illustrating a configuration of the adhesive member 120 according to the invention.

Terms and words used in Specification and Claims should not be interpreted as general and dictionary meanings, and should be interpreted as meanings and concepts corresponding to the technical spirit of the invention on the basis that the inventor can appropriately define concepts of terms to explain the invention of the inventor in the best way.

Accordingly, embodiments described in Specification and configurations illustrated in Drawings are merely a preferred embodiment of the invention, and do not represent all the technical spirits of the invention. Therefore, it should be understood that there are various equivalents and modified examples which can substitute them at the time point of filing the application.

First, as illustrated in Figure 4, the adhesive member 120 is formed to be thin to have an adhesive function on both faces, an OCA (optically clear adhesive) tape may be employed as an example, and it can be variously modified and applied within the scope of having an adhesive function on both faces, being transparent, and having a thin thickness.

Referring to a configuration of the adhesive member 120 in detail, the adhesive member 120 includes an adhesive layer 122 having an adhesive function on both faces, and protective films 124 for protecting both faces of the adhesive layer 122.

The adhesive member 120 further includes a printable layer 126 that is a major configuration.

The printable layer 126 has a configuration in which the protective film 124 is removed and printing or deposition can be performed on the adhesive layer 122 having the adhesive function.

In other words, the printable layer 126 has a configuration in which the print layer 130 or the deposition layer 140 such as a letter, a figure, a pattern, and a metallic texture can be formed.

More specifically, since the adhesive layer 122 has an adhesive function when the protective film 124 is removed, printing is impossible. Accordingly, the printable layer 126 is formed on a face exposed by removing any one of the pair of protective films 124 provided on the adhesive layer 122, and the print layer 130 or the deposition layer 140 can be formed.

In the embodiment of the invention, the printable layer 126 is configured to satisfy high transparency, thin thickness, and predetermined strength by employing a UV coating layer.

The protective film 124 remains on the face, on which the printable layer 126 is not formed, of both faces of the adhesive layer 122, and the protective film 124 is removed later on and is attached to the window 110.

Hereinafter, configurations of various embodiments of the adhesive member 120 will be described with reference to Figure 5.

Figure 5 is a plan view illustrating an external appearance configuration of a panel employing a display unit for a touch screen having the adhesive member 120 according to the invention.

As illustrated in the figure, the display unit 100 for a touch screen is provided on the rear side of the window 110 constituting the external appearance of a touch screen in a capacitive overlay type, and completes a panel including the window 110.

The window 110 generally employs tempered glass, and the adhesive member 120 is attached to the rear side of the window 110 to prevent the window 110 from being scattered when the window 110 is broken.

More specifically, the adhesive layer 122 exposed to have an adhesive function by removing the protective film (the protective film 124 positioned below as viewed in Figure 4) is attached to the rear face of the window 110.

The printable layer 126 is formed on the rear face of the adhesive layer 122, and the print layer 130 or the deposition layer 140 can be formed thereon.

When the print layer 130 or the deposition layer 140 is employed as the configuration of being formed on the rear face of the printable layer 126, different detailed configurations will be described below.

A transparent display window 152 is provided at the center of the display panel for a touch screen.

The display window 152 keeps transparency since the print layer 130 or the deposition layer 140 described above is not formed on the rear side of the printable layer 126 at all, and is an area which allows display to project.

The deposition layer 140 and the print layer 130 are provided in the area where the display window 152 is not provided.

The print layer 130 is configured to project a letter, a figure, or the like having colors through the window 110 as illustrated in Figure 5, and the print layer 130 in the state of uniquely having a color can be projected to the outside of the window 110 since the window 110, the adhesive layer 122, and the printable layer 126 are transparent.

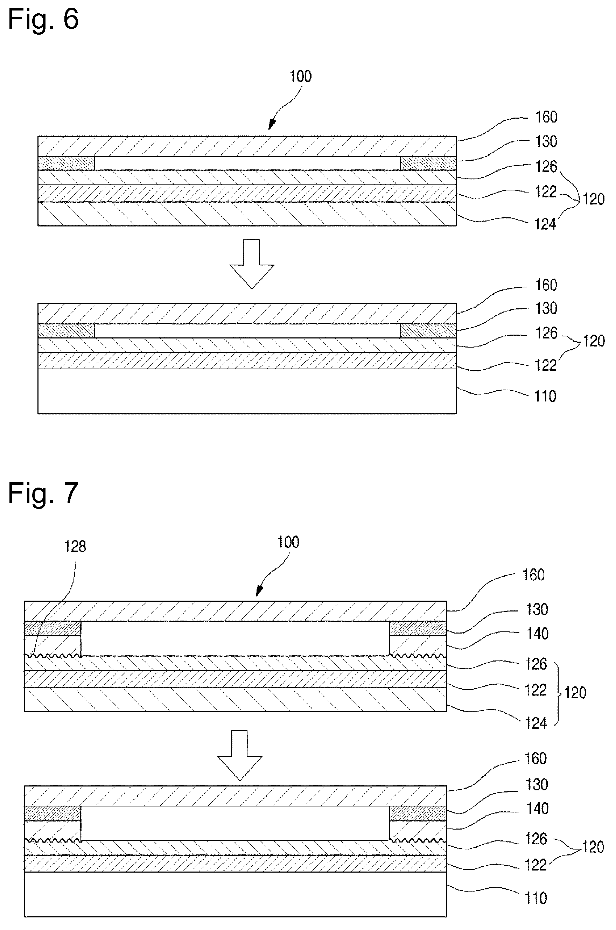

The deposition layer 140 is deposited on the rear face of the printable layer 126 and is configured to exhibit a metallic texture by scattering light. When a pattern unit (reference sign 128 in Figure 7) is provided on the printable layer 126, a pattern of a metallic texture is displayed by preventing the pattern from being disturbed by shielding the pattern unit 128.

Hereinafter, a detailed configuration of the display unit 100 for a touch screen will be described with reference to Figure 6.

Figure 6 is a longitudinal cross-sectional view of I-I' of Figure 5 illustrating an internal configuration of a first embodiment of the display unit 100 for a touch screen having the adhesive member 120 according to the invention, and a longitudinal cross-sectional view before attaching the window 110.

Figure 6 is a diagram illustrating an internal configuration when the display unit 100 for a touch screen does not have the metallic texture and has only colors such as white and black.

First, referring to the upper diagram of Figure 6, the print layer 130 is formed on the upper face of the printable layer 126. The print layer 130 is formed only at a specific portion of the display unit 100 for a touch screen, and thus is configured to be positioned only at the edge of the printable layer 126 as illustrated.

The print layer 130 it restricted so as not to be formed at the center portion, light emitted from a light emitting element such as LCD, LED, and OLED to be positioned on the upside can pass to the outside through the window 110.

A print protective layer 160 is provided on the upper face of the print layer 130. The print protective layer 160 has a configuration for protecting the print layer 130, and it is preferable to attach a protective film.

Although not illustrated in the drawings of the invention, the print protective layer 160 is removed later, and a constituent element such as a transparent electrode or a touch sensing element is positioned on the upper side of the print layer 130.

In the configuration described above, when the protective film 124 positioned below is removed and then the window 110 is attached thereto, a panel illustrated in the lower diagram of Figure 6 is completed, and it is the same as the longitudinal cross-sectional view of I-I' of Figure 5.

An inner configuration of the display unit 100 for a touch screen having a pattern of a metallic texture will be described with reference to Figure 7.

Figure 7 is a longitudinal cross-sectional view of I-I' of Figure 5 illustrating an internal configuration of a second embodiment of a display unit 100 for a touch screen having an adhesive member 120 according to the invention, and is a longitudinal cross-sectional view before attaching a window 110.

As illustrated in the upper diagram of Figure 7, the display unit 100 for a touch screen according to the second embodiment is provided with a pattern unit 128 on one side of the printable layer 126. The pattern unit 128 is formed to have a pattern such as a wave pattern, and a deposition layer 140 capable of keeping such a pattern of the printable layer 126 is provided on the upper face of the printable layer 126.

Accordingly, the pattern unit 128 is positioned on an interface between the deposition layer 140 and the printable layer 126 with the pattern kept, to bend light, the deposition layer 140 has metallic luster to embody a shiny pattern by scattering the bent light, and an unnecessary portion thereof after being formed by a vacuum deposition process is removed by an etching process.

A print layer 130 is provided on the upside of the deposition layer 140. The print layer 130 can display a letter, a figure, and the like as described above, and has a color, and thus it can represent a metallic texture having a predetermined color by scattering light in combination with the deposition layer 140.

The print protective layer 160 described above is provided on the upper face of the print layer 130.

Meanwhile, when the protective film 124 positioned on the downside in the configuration illustrated in the upper diagram of Figure 7 is removed, the lower face of the adhesive layer 122 is exposed and has an adhesive function, and a panel having the structure illustrated in the longitudinal cross-sectional view of I-I' of Figure 5 is completed by attaching to the upper face of the window 110.

The scope of such an invention is not limited to the embodiments exemplified above, and can be variously modified within the technical scope described above on the basis of the invention by those skilled in the art.

For example, in the embodiments of the invention, it is described that the print layer 130 is configured by a single layer, but it is obvious that the layer may be configured by multiple layers, and various colors may be applied thereto, to provide various colors of a letter, a figure, a pattern, and the like.

In addition, in the embodiments of the invention, only the structure of being coupled to two types of panels is exemplified, but the invention can be applied to windows having various external appearances and shapes within the scope in which a printable layer is provided on one face of an adhesive layer and a protective film is provided on the other face.

### [Industrial Applicability]

According to the invention, a printable layer is provided on one face of an adhesive member having an adhesive function on both faces, a print layer or a deposition layer representing a letter, a figure, a pattern, a metallic texture, and the like can be formed, a PET film necessarily required for printing as conventional is removed, and thus great amounts of adhesive members having a thin thickness and with significantly reduced production costs can be produced.

According to the invention, since a PET film is not provided, the adhesive member can be attached even to a curved face irrespective of a shape of a window made of tempered glass or PC, and can be widely applied to various products to which a display panel for a touch screen is applied.

## Claims

1. An adhesive member comprising:
an adhesive layer which has an adhesive function on both faces; and
protective films which are provided on both faces of the adhesive layer,
wherein a printable layer for forming a print layer or a deposition layer representing any one or more of a letter, a figure, a pattern, and a metallic texture is provided on one face of the adhesive layer from which any one of the pair of protective films is removed.

2. The adhesive member according to Claim 1, wherein the printable layer is a UV coating layer.

3. A display unit for a touch screen having an adhesive member, comprising:
an adhesive member including an adhesive layer which has an adhesive function on both faces, and protective films which are provided on both faces of the adhesive layer, wherein a printable layer for forming a print layer or a deposition layer representing any one or more of a letter, a figure, a pattern, and a metallic texture is provided on one face of the adhesive layer from which any one of the pair of protective films is removed;
a print layer which is formed on the printable layer; and
a print protective layer for protecting the print layer.

4. A display unit for a touch screen having an adhesive member, comprising:
an adhesive member including an adhesive layer which has an adhesive function on both faces, and protective films which are provided on both faces of the adhesive layer, wherein a printable layer for forming a print layer or a deposition layer representing any one or more of a letter, a figure, a pattern, and a metallic texture is provided on one face of the adhesive layer from which any one of the pair of protective films is removed;
a deposition layer which is formed on the printable layer and diffuses external light;
a print layer which is formed on the deposition layer; and
a print protective layer for protecting the print layer.

5. The display unit for a touch screen having an adhesive member according to Claim 4, wherein a pattern unit having a pattern is provided on one side of the printable layer.

6. The display unit for a touch screen having an adhesive member according to Claim 3 or 5, wherein the adhesive member is attached to a window by selectively removing the protective film provided on one face.

7. The display unit for a touch screen having an adhesive member according to Claim 5, wherein the print layer is formed of multiple layers.
